# EUROPÄISCHE PATENTSCHRIFT

(11) **EP 1 230 775 B1**
(45) Veröffentlichungstag und Bekanntmachung des Hinweises auf die Patenterteilung: **08.02.2006**
(21) Anmeldenummer: 00962317.4
(22) Anmeldetag: 14.08.2000
(51) Int. Cl.: H04L 29/00, G06F 17/30

(54) **INTERAKTIVES KOMMUNIKATIONSSYSTEM UND VERFAHREN ZU DESSEN STEUERUNG**
INTERACTIVE COMMUNICATIONS SYSTEM AND METHOD FOR CONTROLLING THE SAME
SYSTEME DE COMMUNICATION INTERACTIF ET PROCEDE POUR EN ASSURER LA COMMANDE

(30) Priorität: 20.08.1999 DE 19939410; 20.04.2000 DE 10019719
(43) Veröffentlichungstag der Anmeldung: 14.08.2002
(73) Patentinhaber: adward AG, 80634 München (DE)
(72) Erfinder: Reger, Gerd, 80803 München (DE); Rehm, Walter, 80337 München (DE); Sailer, Klaus, 81667 München (DE); Schiller, Bernd, 81539 München (DE)
(74) Vertreter: Betten & Resch
(86) Internationale Anmeldenummer: PCT/EP2000/007936
(87) Internationale Veröffentlichungsnummer: WO 2001/015404

(56) Entgegenhaltungen:
- EP-A- 0 733 983
- EP-A- 0 749 081
- EP-A- 0 753 949
- EP-A- 0 875 843
- EP-A- 0 946 061
- WO-A-98/47090
- WO-A-98/58334
- WO-A-99/27454
- DE-A- 19 723 479
- US-A- 5 448 625
- US-A- 5 937 392

## Beschreibung

Die Erfindung betrifft ein interaktives und/oder bidirektionales Kominunikationssystem.

In interaktiven Kommunikationssystemen nimmt der Benutzer keine rein passive, rezeptive Rolle ein, sondern wechselt fortwährend zwischen einer Sender- und Empfangerrolle. Anders als bei Massenkommunikationsformen des 20sten Jahrhunderts wie z. B. TV- oder Radioausstrahlungen, steuert der Benutzer eines Kommunikations-Endgerätes in einem interaktiven Kommunikationssystem die Dauer der Informationsübermittlung, die Art und Menge der Informationen, die er erhält, selbst.

Die Platzierungsmöglichkeiten von Werbebotschaften zur Finanzierung der Kommunikationssysteme sind dadurch erheblich eingeschränkt. So muß die Werbebotschaft derzeit als Ausschnitt des vom Benutzer gewählten Contentstreams z. B. im Internet als sogenanntes "Banner" platziert werden, benötigt dabei jedoch Verbindungskapazitäten und bedeutet somit lästigen Zeitverlust. Darüber hinaus kann sich die Wirkung durch die Beschränkung auf einen Ausschnitt der gesamten Wiedergabefläche ("Fenster") oder einen Teil der Wiedergabemöglichkeiten (rein optisch oder rein akustisch) zu wenig entfalten. Die Gestaltungsmöglichkeiten sind im Verhältnis zu einem voll animierten TV-Werbespot gering. Ebenfalls ein entscheidender Nachteil ist, daß die Platzierung der Werbebotschaft als Ausschnitt innerhalb eines Contentstreams von der Attraktivität dieses Contentstreams oder des Anbieters dieses Contentstreams abhängig ist. Zudem besteht das Problem des Transaktionsaufwandes und der Transaktionskosten bei der Anlieferung, redaktionellen Aufbereitung, Integration und Abrechnung mit diesem Anbieter. Diese Probleme bestehen selbst dann, wenn die Werbung innerhalb eines fest definierten Fensters platziert wird.

EP 0 753 949 offenbart ein multimediales Kommunikationssystem, bei dem ein Content-Strom von einem Informationsprovider zu einem Benutzer übertragen wird. Abhängig von den Präferenzen des Benutzers kann in den Content-Strom zu reservierten Zeiten, die in einer entsprechenden Tabelle festgelegt sind, Werbung eingefügt werden.

EP 0 946 061 offenbart ein Kommunikationsverfahren, bei dem abhängig von den Präferenzen eines Telefonanrufers Werbung in das Telefongespräch eingeblendet wird.

Aus US-5,448,625 ist ein Telefonwerbeverfahren bekannt, bei dem Werbung aus einem Speicher ausgewählt wird und in einem entsprechenden Kommunikationsmodus den Kommunikationsparteien eingespielt wird. Abhängig von der eingeblendeten Werbung erfolgt die Berechnung der Telefonkosten.

WO 98/47090 beschreibt ein Verfahren zum Download von Informationen, während eine Kommunikationsverbindung ungenutzt (idle) ist. Während der Zeit, während der eine Kommunikationsverbindung ungenutzt ist und der Benutzer andere Operationen ausführt, werden automatisch Informationen von einer Intemetseite heruntergeladen. Das Anzeigen der Informationen erfolgt dann, wenn der Benutzer auf eine andere Seite klickt und während der Zeit, die für das Herunterladen der Informationen von dieser anderen Seite benötigt wird.

EP 0 875 843 beschreibt ein System, bei dem, sobald eine Seite aufgerufen wird, während der Ladezeit in kleinen Etappen Werbung downgeloaded und angezeigt wird, bis eine neue Seite geladen ist.

EP-A-749 081 offenbart ein interaktives Kommunikationssystem bestehend aus Servern (104) und Client-Modulen (102), sowie einem Providerserver wie z.B. CompuServe, AmericaOnline oder Prodigy, der dazu dient die Client-Module mit den Servern zu verbinden. Vom Server werden nun Daten geladen und zwar durch Verbindungsaufbau zu vorab definierten oder beliebig definierbaren Zeiträumen. Das Client-Modul beinhaltet einen Data-Viewer zur Anzeige der geladenen Informationen und sogenannte Bildschirmschoner zur Anzeige von Informationen während Nutzungspausen.

EP-A-0 733 983 offenbart ein interaktives Kommunikationssystem bestehend aus Servern (120) und Client-Modulen (101), sowie einem Providerserver (110), der dazu dient die Client-Module mit den Servern zu verbinden. Vom Server werden Daten geladen und zwar durch Verbindungsaufbau zu vorab definierten oder beliebig definierbaren Zeiträumen bei der Aktivierung eines ScreenSavers.

Der Erfindung liegt die Aufgabe zugrunde, ein interaktives oder bidirektionales Kommunikationssystem sowie ein Verfahren zu dessen Steuerung bereitzustellen, mit denen die oben genannten Nachteile der bisher bekannten Kommunikationssysteme und zugehörigen Steuerungsverfahren überwunden werden.

Erfindungsgemäß wird diese Aufgabe gelöst durch ein Kommunikationssystem nach Anspruch 1. und ein Verfahren nach Anspruch 2.

Dabei werden bzw. wird gemäß einem Ausführungsbeispiel in einem interaktiven Kommunikationssystem wenigstens ein erstes Kommunikations-Endgerät und ein zweites Kommunikations-Endgerät, vorzugsweise beliebig viele erste Kommunikations-Endgeräte und beliebig viele zweite Kommunikations-Endgeräte bei wenigstens einer von diesen Kommunikations-Endgeräten unabhängigen Verbindungsstation registriert und durch die Verbindungsstation automatisch und ohne aktive Steuerung durch die Benutzer wenigstens eine direkte Verbindung, vorzugsweise nacheinander oder gleichzeitig beliebig viele direkte Verbindungen zwischen verschiedenen ersten und zweiten Kommunikations-Endgeräten aufgebaut, aufrechterhalten und dabei auf von den Benutzern nicht aktiv ausgewählte Daten zugegriffen und von den Benutzern nicht aktiv ausgewählte Daten übermittelt, verarbeitet und ausgegeben, wobei die Zahl und Dauer der Verbindung/en, des Zugriffs auf die Daten, der Datenübermittlung, -verarbeitung und -ausgabe über vorab festgelegte oder beliebig definierbare Kriterien, vorzugsweise über Zeitdauer oder Datenmenge oder Datenart gesteuert werden.

Mit dem Verfahren gemäß einem Ausführungsbeispiel lassen sich unter anderem Client Module in Nutzungspausen nacheinander jeweils für kurze Zeit mit beliebigen oder nach beliebigen Kriterien festlegbaren Content-Provider-Servern und sogenannten Adservern zur Übermittlung von Werbung ohne redaktionelle Zwischenschritte direkt verbinden solche Verbindungen werden in Nutzungspausen zwischen Client Computern und den Content-Provider-Servern hergestellt.

gemäß einem Ausführungsbeispiel werden die Zeiten, in denen ein erstes Kommunikations-Endgerät in einem interaktiven Kommunikationssystem nicht benutzt wird, zur Übermittlung und Ausgabe von Daten, bevorzugt Informationen, besonders bevorzugt Werbung genutzt.

Bei dem Verfahren kann die Werbung wieder unterbrochen werden, sobald das erste Kommunikations-Endgerät wieder benutzt wird.

Im folgenden werden Ausführungsbeispiele der Erfindung erläutert. Die nachstehende beispielhafte Aufzählung möglicher Ausführungsbeispiele der Erfindung ist nicht beschränkend, vielmehr läßt sich die Erfindung vorteilhaft für alle Anwendungszwecke verwenden, bei denen Steuerungsverfahren in interaktiven Kommunikationssystemen eingesetzt werden.

Bei einem geeigneten erfindungsgemäßen Verfahren werden in einem interaktiven Kommunikationssystem (A) beliebig viele erste Kommmikations-Endgeräte (B1a - B1n) und beliebig viele zweite Kommunikations-Endgeräte (B2a - B2n) bei wenigstens einer von diesen Kommunikations-Endgeräten unabhängigen Verbindungsstation (C) registriert und durch die Verbindungsstation automatisch und ohne aktive Steuerung durch die Benutzer nacheinander oder gleichzeitig beliebig viele direkte Verbindungen (D1a - D1n) zwischen verschiedenen ersten Kommunikations-Endgeräten (B1a - B1n) und zweiten Kommunikations-Endgeräten (B2a - B2n) aufgebaut, aufrechterhalten und dabei auf von den Benutzern nicht aktiv ausgewählte Daten zugegriffen und von den Benutzern nicht aktiv ausgewählte Daten übermittelt, verarbeitet und ausgegeben.

Geeignete interaktive Kommunikationssysteme im Sinne der vorliegenden Erfindung sind alle Kommunikationssysteme, bei denen zwischen wenigstens zwei Kommunikations-Endgeräten eine bidirektionale Verbindung aufgebaut werden kann. Internet, Computernetzwerke, Video- oder Multimedianetze, Intranets in Firmen und öffentlichen Einrichtungen sind wichtige Beispiele hierfür, aber auch Talekommunikationssysteme.

Bidirektionale Verbindungen sind alle Einrichtungen, Anordnungen und Verfahren zur Bereitstellung und Übermittlung von Daten an Kommunikations-Endgeräte, wobei durch die Benutzung der Kommunikations-Endgeräte eine Möglichkeit zur Steuerung der Verbindung und der Bereitstellung und Übermittlung der Daten gegeben ist. Beispiele hierfür sind Telekommunikationsverbindungen über Satellit, per Kabel oder Funk, Intranet- und Internetverbindungen per Kabel oder Funk.

Geeignete zweite Kommunikations-Endgeräte sind alle Einrichtungen, die die Verbindung zur Bereitstellung und zur Übermittlung von Daten benutzen. Beispiele hierfür sind Sender, Computer und Server mit Netzanschluß wie Modems, Netzwerkkarten oder zur Verarbeitung drahtlos übertragener Daten geeigneten Interfaces.

Geeignete erste Kommunikations-Endgeräte sind alle Einrichtungen, die die Verbindung zum Empfang und zur Speicherung, Verarbeitung und Ausgabe von Daten benutzen. Beispiele hierfür sind Computer und Client Module mit Netzanschluß wie Modems, Netzwerkkarten oder zur Verarbeitung drahtlos übertragener Daten geeigneten Interfaces.

Geeignete unabhängige Verbindungsstationen sind alle Einrichtungen, die zum automatisierten Aufbau oder zur automatisierten Vermittlung einer direkten Verbindung zwischen wenigstens zwei Kommunikations-Endgeräten dienen. Beispiele hierfür sind alle Arten von Servern z. B. von Telekommunikations- oder Internetprovidern, Portalen usw.

Geeignete Daten im Sinn der vorliegenden Erfindung sind audio-visuelle Informationen. Beispiele hierfür sind stumme, vertonte, statische und animierte Bilder und Filme, vorzugsweise Werbebilder oder Werbespots.

In einem Anwendungsbeispiel für das Internet (A) trägt ein PC-Nutzer online die Identifikation seines Client Moduls (B1a) bei dem Server (C) eines Serviceproviders (Werbevermittler) ein und registriert sich damit als Werbeempfänger. Werbetreibende tragen die Links für ihre Server (B2a - B2n) ebenfalls bei dem Providerserver ein und registrieren sich damit als Werbesender. Wenn nun beim registrierten Client Modul (Werbeempfänger) z. B. mit Hilfe einer lokal applizierten Software automatisch eine Nutzungspause detektiert wird, kann automatisch eine Verbindung zum Providerserver aufgebaut werden. Der Providerserver vermittelt die Verbindung durch eine automatische Linkverwaltung direkt an einen Werbetreibenden-Server (Werbesender). Der PC-Nutzer sieht bzw. hört den Werbespot von der Homepage des ersten werbetreibenden Servers (B2a). Nach einem vorher definierten Zeitraum, z. B. nach einer, zehn oder dreißig Sekunden, wird diese Verbindung und die Wiedergabe des Werbespots wieder unterbrochen und es kann eine neue Verbindung zu einem zweiten werbetreibenden Server (B2b) aufgebaut werden. Die Zahl und die Dauer dieser Verbindungen kann durch das Ende der Nutzungspause beim Client Modul gesteuert werden oder durch eine vorgegebene Zeitspanne usw. Beliebige Client Module können gleichzeitig und/oder nacheinander mit beliebigen werbetreibenden Servern verbunden werden. Der PC-Nutzer greift auf Inhalte zu, die er zum Zeitpunkt der Verbindung nicht aktiv bestimmen kann.

Bei einem weiteren Durchführungsbeispiel des erfindungsgemäßen Verfahrens wird beim Auftreten eines vorab definierten ersten Betriebszustandes a eines ersten Kommunikations-Endgerätes automatisch ein zweiter Betriebszustand b hergestellt; der erste Betriebszustand a ist hierbei eine Unterbrechung der Benutzung für einen vorab definierten Zeitraum mit dem ersten Kommunikations-Endgerät; insbesondere bevorzugte erste Betriebszustände a sind unterbrochene Benutzerinteraktionen mit dem ersten Kommunikations-Endgerät für einen vorab definierten Zeitraum über Tastatur, Maus, Joystick, Pen, Trackball, Patchfield, Touchscreen; ein geeigneter zweiter Betriebszustand b ist der wenigstens einmalige Aufbau einer Kommunikationsverbindung zwischen dem ersten Kommunikations-Endgerät und einer externen Datenquelle und die wenigstens einmalige, vorzugsweise permanente Übermittlung externer und vom Benutzer nicht aktiv ausgewählter Daten und die wenigstens einmalige Speicherung, verarbeitung oder Ausgabe solcher externer Daten durch das erste Kommunikations-Endgerät für einen vorab definierten Zeitraum, wobei eine solche Kommunikationsverbindung, Übermittlung, Speicherung, Verarbeitung oder Ausgabe neu oder anstelle oder zusätzlich zu einer bestehenden Kommunikationsverbindung oder stattfindenden Übermittlung, Speicherung, Verarbeitung oder Ausgabe aufgebaut wird oder stattfindet. An Computern, an denen für eine bestimmte Zeit nicht gearbeitet wurde, wird automatisch eine Internetverbindung hergestellt, Werbeseiten oder -spots übermittelt und am Bildschirm ausgegeben.

In einer bevorzugten Ausführungsform wird beim Auftreten eines vorab definierten dritten Betriebszustandes c nach dem Eintreten des zweiten Betriebszustandes b automatisch ein vierter Betriebszustand d hergestellt, wobei der dritte Betriebszustand c eine Wiederbenutzung des ersten Kommunikations-Endgerätes ist. Insbesondere bevorzugter dritter Betriebszust and c ist eine Benutzerinteraktion mit dem ersten Kommunikations-Endgerät über Tastatur, Maus, Joystick, Pen, Trackball, Patchfield, Touchscreen.

## Patentansprüche

1. Interaktives Kommunikationssystem, welches aufweist:
- ein ersten Computer als Client-Modul (B1a);
- einen zweitens Computer der als Content-Provider-Server (B2a-B2n) fungiert;
- einen Providerserver als unabhängige Verbindungsstation (C), auf dem das Client-Modul (B1a) als Informationsempfänger und der Content-Provider-Server (B2a-B2n) als Informationssender registriert sind, wobei Werbetreibende die Links für ihre Content-Provider-Server beim Providerserver eintragen, um sich damit als Werbesender zu registrieren, wobei
- der Providerserver (C) ausgebildet ist, eine Verbindung durch eine automatische Linkverwaltung zwischen Client-Modul (B1a) und dem als Informationssender fungierenden Content-Provider-Server (B2a-B2n) zu vermitteln,
- das Client-Modul (B1a) zur automatischen Detektion einer Nutzungspause mit Hilfe einer lokal applizierten Software ausgebildet ist, um in Reaktion auf die Detektion einer Nutzungspause eine durch den Providerserver (C) vermittelte Verbindung zum Content-Provider-Server (B2a-B2n) aufzubauen, wobei zur Detektion der Nutzungspause die Unterbrechung von Benutzerinteraktionen mit dem Client für einen vorab definierten Zeitraum erfasst werden, wobei ferner
- das Client-Modul (B1a) dazu ausgebildet ist, nach der durch die automatische Linkverwaltung vermittelten Verbindung Informationen vom Content-Provider-Server (B2aB2n) zu empfangen, zu speichern und optisch oder akustisch anzuzeigen
wobei es sich bei den Benutzerinteraktionen um Benutzerinteraktionen mittels Tastatur, Maus, Joystick, Pen, Trackball, Patchfield oder Touchscreen handelt.

2. Verfahren zum Betreiben eines interaktiven Kommunikationssystems, wobei das interaktive Kommunikationssystem aufweist:
- einen ersten Computer als Client-Modul (B1a);
- einen zweiten Computer, der als Content-Provider-Server (B2a-B2n) fungiert;
- einen Providerserver (C) als unabhängige Verbindungsstation, auf dem das Client-Modul (B1a) als Informationsempfänger und der Content-Provider-Server (B2a-B2n) als Informationssender registriert sind, wobei Werbetreibende die Links für ihre Content-Provider-Server beim Providerserver eintragen, um sich damit als Werbesender zu registrieren, wobei das Verfahren ferner die folgenden Schritte aufweist:
- Vermitteln einer Verbindung durch eine automatische Linkverwaltung zwischen Client-Modul (B1a) und dem als Informationssender fungierenden Content-Provider-Server (B2a-B2n) durch den Providerserver;
- Automatische Detektion einer Nutzungspause durch das Client-Modul (B1a), wobei zur Detektion der Nutzungspause mit Hilfe einer lokal applizierten Software die Unterbrechung von Benutzerinteraktionen mit dem Client für einen vorab definierten Zeitraum erfasst werden, um in Reaktion auf die Detektion einer Nutzungspause eine durch den Providerserver (C) vermittelte Verbindung zum Content-Provider-Server (B2a-B2n) aufzubauen,
- Empfangen und optisches oder akustisches Anzeigen von Informationen durch das Client-Modul (B1a) nach der durch die automatische Linkverwaltung vermittelten Verbindung des Client-Moduls (B1a) zum Content-Provider-Server (B2a-B2n)
wobei es sich bei den Benutzerinteraktionen um Benutzerinteraktionen mittels Tastatur, Maus, Joystick, Pen, Trackball, Patchfield oder Touchscreen handelt.

## Claims

1. An interactive communication system, comprising:
- a first computer as a client module (B1a);
- a second computer which acts as a content provider server (B2a-B2n);
- a provider server as independent switch station, on which the client module (B1a) is registered as information receiver and the content provider server (B1a-B1n) is registered as content sender, wherein advertisers enter the links of their content-provider-server at the provider server to register as commercial senders, wherein
- said provider server (C) is arranged to mediate a connection with the help of an automatic link administration between the client module (B1a) and the content provider server (B2a-B2n), that is used as information sender, wherein
- the client module (B1a) is arranged to detect automatically a usage break with the help of a locally applied software in order to establish a connection to the content provider server (B2a-B2n) that is arranged by the provider server (C) as response to the deteced usage break, wherein the detection of the usage break is defined as a lack of user interactions with the client for a predefined space of time, wherin further
- the client module (B1a) is arranged to receive, to store and to display information of the content provider server (B2a-B2n) optically or acustically, after a connection is arranged by the autmatic link administration, wherein
- user interactions concern user interactions via keyboard, mouse, joystick, pen, trackball or touchscreen.

2. A procedure to operate an interactive communication system, wherin the interactive communication system comprising:
- a first computer as a client module (B1a);
- a second computer which acts as a content provider server (B2a-B2n);
- a provider server as independent switch station, on which the client module (B1a) is registered as information receiver and the content provider server (B1a-B1n) is registered as content sender, wherin the advertisers enter the links for their content provider server to register as commercial senders, wherein the procedure further comprises following steps:
- mediate a connection with the help of an automatic link administration between the client module (B1a) and the content provider server (B2a-B2n), that is used as information sender by said provider server (C);
- automatic detection of a usage break by the client module (B1a) wherein the detection of the usage break is managed by detecting a lack of user interactions with the client for a predefined space of time with the help of a locally applied software, in order to establish a connection to the content provider server (B2a-B2n) arranged by the provider server (C) as response to the deteced usage break;
- receiving and optical or acustial displaying of information by the client module (B1a) after a connection to the content provider server (B2a-B2n) is arranged by the automatic link administration, wherein
- user interactions concern user interactions via keyboard, mouse, joystick, pen, trackball or touchscreen.

## Revendications

1. Système de communication interactif, lequel présente:
- un premier ordinateur comme module client (B1a);
- un deuxième ordinateur fonctionnant comme serveur fournisseur de contenu (B2a-B2n);
- un serveur fournisseur comme station de connexion indépendante (C), sur lequel le module client (B1a) et le serveur fournisseur de contenu (B2a-B2n) sont enregistrés respectivement comme récepteur d'informations et comme émetteur d'informations, les annonceurs entrant les liens pour leurs serveurs fournisseur de contenu sur le serveur fournisseur, afin de s'enregistrer ainsi en tant que diffuseurs publicitaires, dans lequel
- le serveur fournisseur (C) étant formé pour établir une connexion par une gestion automatique de liens entre le module client (B1a) et le serveur fournisseur de contenu (B2a-B2n) fonctionnant comme émetteur d'informations,
- le module client (B1a) étant formé pour la détection automatique d'une pause d'utilisation avec l'aide d'un logiciel appliqué localement, afin d'établir une connexion établie par le serveur fournisseur (C) avec le serveur fournisseur de contenu (B2a-B2n) en réaction à la détection d'une pause d'utilisation, l'interruption des interactions d'utilisateur avec le client pour la détection de la pause d'utilisation étant saisie pour un intervalle de temps défini à l'avance, dans lequel
- le module client (B1a) étant en outre formé afin de recevoir, sauvegarder et afficher visuellement ou de façon sonore des informations du serveur fournisseur de contenu (B2a-B2n) après la connexion établie par la gestion automatique de liens, dans lequel
- les interactions d'utilisateurs étant des interactions au moyen d'un clavier, d'une souris, d'une manette de jeu, d'un crayon, d'une boule de commande, d'un tableau de commande ou d'un écran tactile.

2. Procédé pour l'opération d'un système de communication interactif, le système de communication interactif présentant :
- un premier ordinateur comme module client (B1a);
- un deuxième ordinateur fonctionnant comme serveur fournisseur de contenu (B2a-B2n);
- un serveur fournisseur (C) comme station de connexion indépendante, sur lequel le module client (B1a) et le serveur fournisseur de contenu (B2a-B2n) sont enregistrés respectivement comme récepteur d'informations et comme émetteur d'informations, les annonceurs entrant les liens pour leurs serveurs fournisseur de contenu sur le serveur fournisseur, afin de s'enregistrer ainsi en tant que diffuseurs publicitaires, le procédé présentant en outre les étapes suivantes :
- établissement d'une connexion par une gestion automatique de liens entre le module client (B1a) et le serveur fournisseur de contenu (B2a-B2n) fonctionnant comme émetteur d'informations, par le serveur fournisseur,
- détection automatique d'une pause d'utilisation par le module client (Bla), l'interruption des interactions d'utilisateur avec le client pour la détection de la pause d'utilisation étant saisie pour un intervalle de temps défini à l'avance avec l'aide d'un logiciel appliqué localement, afin d'établir une connexion établie par le serveur fournisseur (C) avec le serveur fournisseur de contenu (B2a-B2n) en réaction à la détection d'une pause d'utilisation,
- réception et affichage visuel ou sonore des informations par le module client (B1a) après la connexion du module client avec le serveur fournisseur de contenu (B2a-B2n) établie par la gestion automatique de liens, dans lequel
- les interactions d'utilisateurs étant des interactions au moyen d'un clavier, d'une souris, d'une manette de jeu, d'un crayon, d'une boule de commande, d'un tableau de commande ou d'un écran tactile.
